# EUROPEAN PATENT SPECIFICATION

(11) **EP 3 295 997 B1**
(45) Date of publication and mention of the grant of the patent: **06.05.2020**
(21) Application number: 17186100.8
(22) Date of filing: 14.08.2017
(51) Int. Cl.: A63B 5/11, A63B 71/02, F16B 7/04, A63B 71/00

(54) **TRAMPOLINE SUPPORT FRAME**
TRAMPOLINTRÄGERRAHMEN
CADRE DE SUPPORT DE TRAMPOLINE

(30) Priority: 13.09.2016 CN 201610819649
(43) Date of publication of application: 21.03.2018
(73) Proprietor: Crowntec (Jiang Xi) Sports Technology Co. Ltd, Jiujiang City, Jiangxi Province 360424 (CN)
(72) Inventor: HSIANG, Hua-Lu, Taoyuan City (TW)
(74) Representative: 2K Patentanwälte Blasberg Kewitz & Reichel

(56) References cited:
- CN-U- 202 545 459
- CN-Y- 2 855 463
- CN-Y- 201 399 182
- CN-Y- 201 433 963
- US-A1- 2010 240 496
- US-B1- 7 658 697

## Description

### FIELD OF THE INVENTION

The present invention is related to a trampoline support frame, particularly to a trampoline support frame with high assembling strength and simplified manufacturing process for meeting requirements for environment protection.

### BACKGROUND OF THE INVENTION

It is found that the structure of trampoline support frame has also become key technology gradually in the improvement of trampoline due to a large amount of jumps and bumps generally arising when a trampoline is used by a user. For instance, China patent publication no. CN202001453 disclosed a connecting structure of trampoline frame comprising a cross rod and a vertical rod. One end of the vertical rod is provided with an annular faucet fixed to the cross rod by welding. Further, China patent publication no. CN201082327 also disclosed an improved trampoline comprising an annular frame, an elastic net, a plurality of supporting components and a plurality of retaining plates. The elastic net is provided at inner side of the annular frame. The supporting components are used for supporting at the bottom of the annular frame, respectively. In this case, each of the supporting components and the annular frame are welded together via the retaining plates so as to be fixed.

It may be found in the technical contents of above two patents, however, there is none of fixing structure between two side surfaces adjacent to the bottom of the cross rod and the vertical rod, because the vertical rod is only fixed to the bottom of the cross rod by welding in the patent no. CN202001453, which further leads to the break of the cross rod with respect to the vertical rod readily generated due to impact force during the trampoline is used. In the patent no. CN201082327, additionally, although one side of the annular frame may be fixed to the supporting component by welding via the retaining plate, there is a problem of insufficient assembling strength owing to none of fixⁱng structure between another side of the annular frame and the supporting component. Furthermore, it may be further found, from the viewpoint of assembling process of the trampoline, that it is necessary to align the retaining plate with the supporting component and the side of annular frame after the supporting component and the annular frame are assembled, followed by fixⁱng the retaining plate at two sides thereof to the supporting component and the annular frame by welding, respectively, via welding equipment. As a result, the increased manufacturing cost due to excessively complicated manufacturing process and the problem of environment protection, such as excessive manufacturing energy consumption, may occur in the trampoline.

US 7 658 697 B1 discloses a trampoline support frame according to the preamble of claim 1. The transversal branch pipe of the annular frame includes a straight welded seam framed on a bottom edge. Longitudinal support tubes are welded to the transversal branch pipe. A reinforcing plate is welded over the main tube and support tube's welded seam junction. The reinforcing plate is welded at the connection between main tube and support tube. However, the transversal branch pipe does not comprise ends with stepped portions of different dimension that can be fitted in each other.

CN 201433963 Y discloses another trampoline support frame wherein the annular frame is formed by a plurality of transversal branch pipes comprising ends with stepped portions of different dimension that can be fitted in each other. The stepped portions extend, however, in horizontal direction. The stepped portions are fitted in each other at the positions of the longitudinal support tubes. Each of the longitudinal support tubes comprises a muffle formed at an upper end thereof, which embraces the ends of the transversal branch pipes with their stepped portions fitted in each other. Boreholes are provided at the stepped portions of the transversal branch pipes, which are aligned with a borehole formed in the muffle, so that a screw extending vertically throught the boreholes can be used to fix the transversal branch pipes with their stepped portions at the muffle of a corresponding longitudinal support tube.

CN 202 545 459 U discloses a similar approach, wherein the muffle formed at an upper end of the longitudinal support tubes is formed by two members each having a U-shaped profile that are fitted together by a screw extending through boreholes formed in upright side-legs of the -shaped profile and through a borehole extending through the transversal branch pipes.

CN 2 855 463 Y discloses a trampoline support frame comprising transversal branch pipes provided with horizontal bearing surfaces, longitudinal branch pipes, and separate reinforcing portions which are attached to the longitudinal and transversal branch pipes by welding.

### SUMMARY OF THE INVENTION

It is an object of the present invention to provide an enhanced trampoline support frame enabling a sufficient assembling strength at sides and and a convenient and reliable manufacturing process, particularly enabling a production at low energy consumption.

This problem is solved by a trampoline support frame as claimed by claim 1. Further advantageous embodiments are the subject-matter of the dependent claims.

According to the present invention there is provided a trampoline support frame comprising a plurality of transversal branch pipes each being provided with a curved portion and connected to each other or configured to be connected to each other so as to form an annular frame which is suited for mounting a bouncing component at an inner side thereof, and a plurality of longitudinal branch pipes, wherein each of said longitudinal branch pipes is provided to one of the transversal branch pipes. Each of the longitudinal branch pipes is respectively provided with a fitting portion, wherein two reinforcing portions are integrally extended from the fitting portion to corresponding two side surfaces of the transversal branch pipe and then fixed to the transversal branch pipe by welding, wherein an accommodating space is formed between the two reinforcing portions and provided for one of the transversal branch pipes to be located therein, particularly accommodated or supported therein, and two bearing surfaces, each of which is formed between two ends of the two reinforcing portions and toward the accommodating space so as to support an assocociated one of the transversal branch pipes.

According to the present invention, each of the transversal branch pipes is respectively provided with a first connecting portion provided at one end of the curved portion and and being provided with a first opening, and a second connecting portion provided at another end of the curved portion and and being provided with a second opening, wherein when a first transversal branch pipe of said plurality of transversal branch pipes and a second transversal branch pipe of said plurality of transversal branch pipes adjacent to said first transversal branch pipe are connected to each other so as to form the annular frame, the second connecting portion of the first transversal branch pipe covers the first connecting portion of the second transversal branch pipe. Specifically, each of the first connecting portions is provided with two first stepped surfaces located at two opposite outer sides of the first opening while extending in parallel with each other and in parallel with the two reinforcing portions, respectively. Each of the second connecting portions is provided with two second stepped surfaces located at two opposite outer sides of the second opening while extending in parallel with the two first stepped surfaces and in parallel with the two reinforcing portions, respectively. The two reinforcing portions of each of the longitudinal branch pipes are attached to the two second stepped surfaces by welding.

According to a further embodiment, each of the first connecting portions is provided with two first curved surfaces connected to the two first stepped surfaces and being opposite to each other, respectively. Each of the second connecting portions is provided with two second curved surfaces connected to the two second stepped surfaces and being opposite to each other so as to be located at two opposite outer sides of the two first curved surfaces, respectively. The two bearing surfaces of each of the longitudinal branch pipes are attached against one of the second curved surfaces.

According to a further embodiment, the two reinforcing portions of each of the longitudinal branch pipes are extended more than one-half of width of the two second stepped surfaces.

According to a further embodiment, each of the longitudinal branch pipes is provided with at least one additive weld hole provided in one of the reinforcing portions, respectively, in such a way that the reinforcing portion is fixed at inner side thereof to the second stepped surface by welding.

According to a further embodiment, the trampoline support frame further comprises a plurality of connecting pipes provided in one of the fitting portions, respectively, and a plurality of supporting pipes mounted while connected to the adjacent two connecting pipes at one side far away from the fitting portion. Further, the trampoline support frame further comprises a plurality of pipes for enclosure net mounted and fixed to the outside of one of the longitudinal branch pipes and one of the connecting pipes, respectively, while extended toward one side far away from the supporting pipe, for allowing a safety net to be mounted thereto.

In comparison with the prior art, the features of above embodiments of the present invention are as follows.

In the present invention, the two reinforcing portions of each of the longitudinal branch pipes are extended from and integrally formed with the fitting portion, such that the two reinforcing portions of each of the longitudinal branch pipes may be welded to the surface of each of the transversal branch pipes directly after the transversal branch pipe is placed into the accommodating space. Thereby, the manufacturing process for the trampoline support frame is simplified, and manufacturing energy consumption is reduced so as to achieve requirements for environment protection. Additionally, assembling strength between each of the longitudinal branch pipes and two outer side surfaces of one of the transversal branch pipes is strengthened by means of the two reinforcing portions of the longitudinal branch pipe. As a result, the problems of excessively complicated manufacturing process and insufficient assembling strength at sides in the prior art may be then solved by the above-mentioned structure.

### BRIEF DESCRIPTION OF THE DRAWINGS

Fig. 1 is a perspective diagram of the present invention.
Fig. 2 is an exploded diagram of the present invention.
Fig. 3 is a perspective diagram of a longitudinal branch pipe of the present invention.
Fig. 4 is a cross-section diagram in which the present invention is embodied.
Fig. 5 is a perspective diagram of another embodiment of the present invention.

### DETAILED DESCRIPTION OF THE PREFERRED EMBODIMENTS

The detailed description and technical solution with respect to the present invention will be now described in conjunction with the drawings as follows.

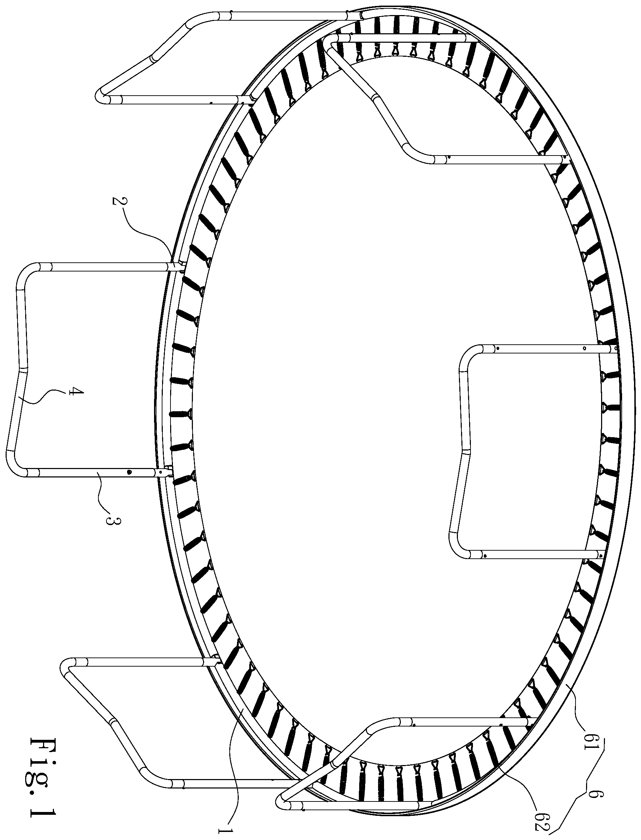

Referring to Figs. 1 to 4, the present invention provides a trampoline support frame comprising a plurality of transversal branch pipes 1 and a plurality of longitudinal branch pipes 2. Each of the longitudinal branch pipes 2 is provided with a fitting portion 21, two reinforcing portions 22, an accommodating space 23 and two bearing surfaces 24, respectively. The two reinforcing portions 22 are extended from and integrally formed with the fitting portion 21, while corresponded to each other. The accommodating space 23 is defined and formed between the two reinforcing portions 22. Each of the two bearing surfaces 24 is formed between two ends of the two reinforcing portions 22 and toward the accommodating space 23. In this case, each of the two reinforcing portions 22 of the longitudinal branch pipe 2 is in the form of a plate, and the two reinforcing portions 22 are mirrored with respect to the center line of the longitudinal branch pipe 2 as a symmetric line. Further, when the trampoline support frame of the present invention is assembled, the transversal branch pipes 1 are connected to each other so as to form an annular frame, in such a way that a bouncing component 6 is allowed to be mounted at the inner side of the transversal branch pipes 1. In one embodiment, the bouncing component 6 comprises a plurality of springs 61 connectingly mounted to the annular frame (i.e., the transversal branch pipes 1), and an elastic net 62 provided at the inner side of the springs 61 and tensioned by the springs 61, as illustrated in Fig. 1.

Then, each of the longitudinal branch pipes 2 is evenly located on the edge of the annular frame, such that each of the transversal branch pipes 1 is placed into the accommodating space 23 and supported by the bearing surfaces 24. The two reinforcing portions 22 of each of the longitudinal branch pipes 2 are attached to two corresponding side surfaces of one of the transversal branch pipes 1. As a result, welding equipment (not shown in the figures) is just used for fixing the two reinforcing portions 22 and the two bearing surface 24 of each of the longitudinal branch pipes 2 to the surface of one of the transversal branch pipes 1 by welding, respectively, such that the outer edge (i.e., the edge of the two reinforcing portions 22 and the edge of the two bearing surfaces 24) at one end of the longitudinal branch pipe 2 is fixed to the transversal branch pipe 1 completely by welding. In this case, the two reinforcing portions 22 of each of the longitudinal branch pipes 2 are extended from and integrally formed with the fitting portion 21, such that the two reinforcing portions 22 of each of the longitudinal branch pipes 2 may be welded to the surface of each of the transversal branch pipes 1 directly after the transversal branch pipe 1 is placed into the accommodating space 23 without precision alignment. Moreover, amount of material to be used during manufacturing process may be reduced, so as to avoid unnecessary waste of raw material. Thereby, the manufacturing process for the trampoline support frame may be simplified, and manufacturing energy consumption may be reduced so as to achieve requirements for environment protection. Furthermore, assembling strength between each of the longitudinal branch pipes 2 and two outer side surfaces of one of the transversal branch pipes 1 is further strengthened, respectively, by means of the two reinforcing portions 22. As such, the problems of excessively complicated manufacturing process and insufficient assembling strength at sides in the prior art may be then solved.

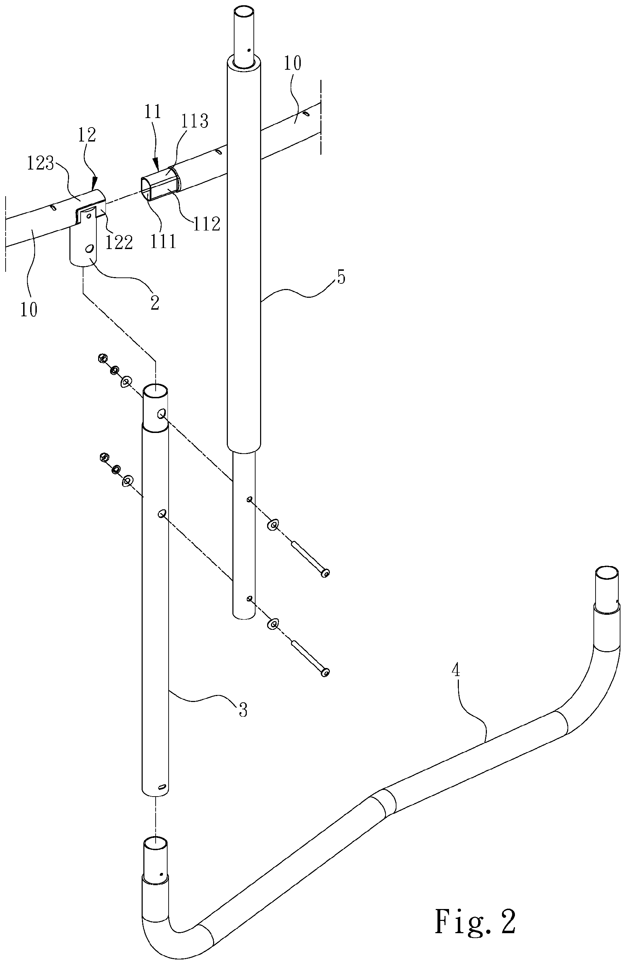

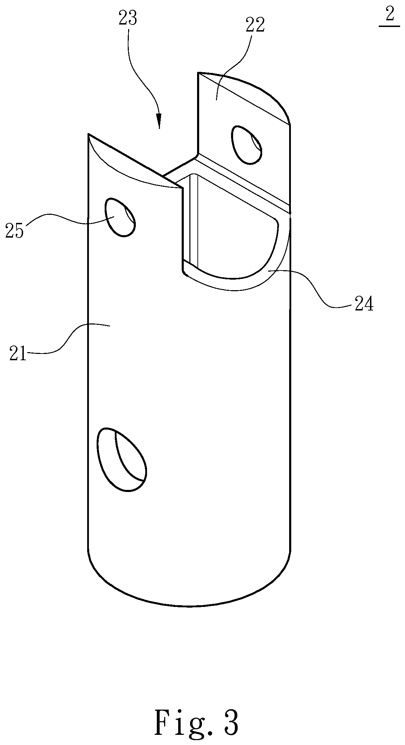

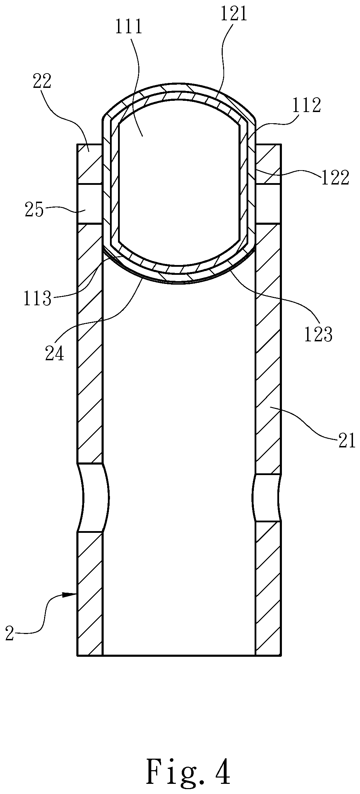

Next, the main technical feature of the trampoline support frame may be clearly seen in the above technical content. Here, embodiments and other technical contents of the trampoline support frame will be further described in the present invention. Specifically, each of the transversal branch pipes 1 is provided with a curved portion 10, a first connecting portion 11 provided at one end of the curved portion 10, and a second connecting portion 12 provided at another end of the curved portion 10, respectively. The second connecting portion 12 of each of the transversal branch pipes 1 is coveringly provided over the first connecting portion 11 of adjacent transversal branch pipe 1. In this case, each of the first connecting portions 11 is provided with a first opening 111, and two first stepped surfaces 112 located at two opposite outer sides of the first opening 111 while in parallel with each other, respectively. Each of the second connecting portions 12 is provided with a second opening 121 covering one of the first openings 111, and two second stepped surfaces 122 located at two opposite outer sides of the second opening 121 while in parallel with the two first stepped surfaces 112, respectively. Each of the two reinforcing portions 22 of the longitudinal branch pipe 2 is then in parallel with each other and extended to attach to the outside of the two second stepped surfaces 122 (illustrated in Figs. 2 to 4). As a result, in addition to fixing the two reinforcing portions 22 to the two second stepped surfaces 122 by welding, respectively, retaining the two reinforcing portions 22 to the two second stepped surfaces 122 is further used for the longitudinal branch pipe 2, so as to enhance the overall assembling strength of the trampoline support frame. Besides, each of the first connecting portions 11 may be provided with two first curved surfaces 113 connected to the two first stepped surfaces 112 and being opposite to each other, respectively. Each of the second connecting portions 12 is provided with two second curved surfaces 123 connected to the two second stepped surfaces 122 and being opposite to each other so as to be located at two opposite outer surfaces of the two first curved surfaces 113. The two bearing surfaces 24 of each of the longitudinal branch pipes 2 are then attached against one of the second curved surfaces 123, as illustrated in Figs. 3 and 4. Accordingly, impact force generated from the bouncing component 6 by a user on the transversal branch pipes 1 may be then evenly distributed by each of the longitudinal branch pipes 2 via the curved two bearing surfaces 24, the first stepped surfaces 112 and the second stepped surfaces 122.

Particularly, the two reinforcing portions 22 of each of the longitudinal branch pipes 2 are extended more than one-half of width of the two second stepped surfaces 122 (as illustrated in Fig. 4), such that each of the transversal branch pipes 1 may be fixed, at two opposite outer sides thereof, to the two reinforcing portions 22 by welding in a large area, so as to enhance assembling strength.

In one embodiment, further, each of the longitudinal branch pipes 2 is provided with at least one additive weld hole 25 provided in one of the reinforcing portions 22, respectively, for the enhancement of assembling strength between each of the transversal branch pipes 1 and each of the longitudinal branch pipes 2. The additive weld hole 25 may be allowed for the welding equipment to weld the inner side of the reinforcing portion 22 to the second stepped surface 122 in a welding manner, whereby the welding area and strength between the reinforcing portion 22 and the second stepped surface 122 are enhanced. In this case, the welding manner is plug weld.

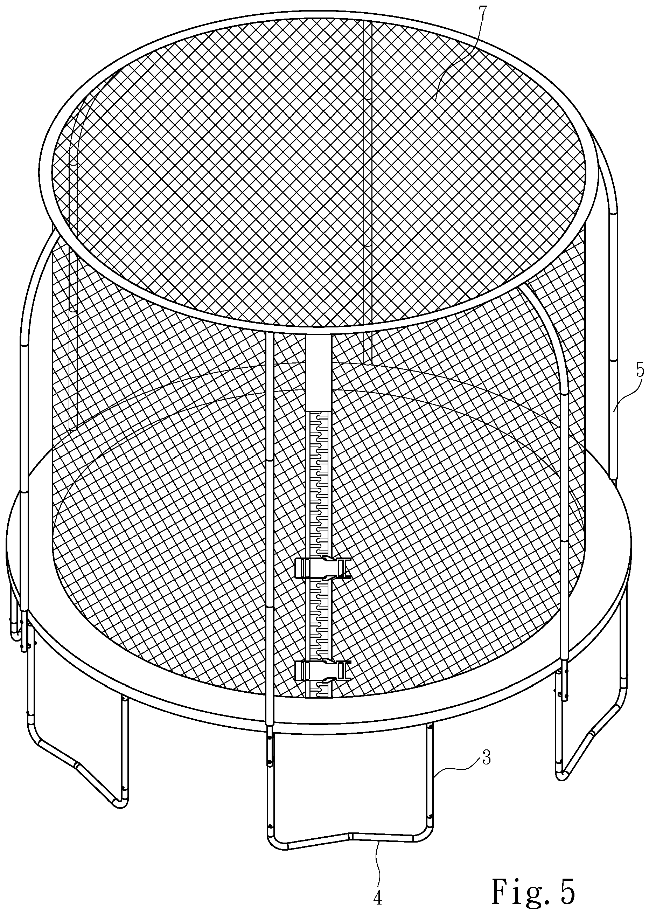

Referring to Figs. 1, 2 and 5 again, on the other hand, the trampoline support frame further comprises a plurality of connecting pipes 3 and a plurality of supporting pipes 4. Each of the connecting pipes 3 is provided in one of the fitting portions 21, respectively, while each of the supporting pipes 4 is then mounted to the adjacent two connecting pipes 3 at one side far away from the fitting portion 21, such that a buffering space is formed between the annular frame and the ground by means of the connecting pipes 3 for allowing bounce of the user performed on the bouncing component 6, while stability of installation of the trampoline support frame is enhanced by means of multi-point contact between the supporting pipes 4 and the ground. In one embodiment, the trampoline support frame further comprises a plurality of pipes for enclosure net 5. Each of the pipes for enclosure net 5 is mounted and fixed to the outside of one of the longitudinal branch pipes 2 and one of the connecting pipes 3, respectively, while extended toward one side far away from the supporting pipe 4, for allowing a safety net 7 to be mounted thereto. Thus, tumbling off the trampoline support frame during bounding on the bouncing component 6 is avoided for the user by barrier provided by the safety net 7.

## Claims

1. A trampoline support frame comprising
a plurality of transversal branch pipes (1) each being provided with a curved portion (10) and connected to each other so as to form an annular frame provided for a bouncing component (6) to be mounted at inner side thereof, and
a plurality of longitudinal branch pipes (2) each provided to one of said transversal branch pipes (1), wherein each of said longitudinal branch pipes (2) is respectively provided with a fitting portion (21),
two reinforcing portions (22) integrally extended from said fitting portion (21) to corresponding two side surfaces of said transversal branch pipe (1) and fixed to said transversal branch pipe (1) by welding,
an accommodating space (23) formed between said two reinforcing portions (22) and provided for one of said transversal branch pipes (1) to be located therein, and
two bearing surfaces (24) each of which is formed between two ends of said two reinforcing portions (22) and toward said accommodating space (23) so as to support one of said transversal branch pipes (1);
**characterized in that** each of said transversal branch pipes (1) is respectively provided with a first connecting portion (11) provided at one end of said curved portion (10) and being provided with a first opening (111), and a second connecting portion (12) provided at another end of said curved portion (10) and being provided with a second opening (121), wherein,
when a first transversal branch pipe (1) of said plurality of transversal branch pipes (1) and a second transversal branch pipe (1) of said plurality of transversal branch pipes (1) adjacent to said first transversal branch pipe (1) are connected to each other so as to form the annular frame, the second connecting portion (12) of the first transversal branch pipe (1) covers the first connecting portion (11) of the second transversal branch pipe (1), wherein
each of said first connecting portions (11) is respectively provided with two first stepped surfaces (112) located at two opposite outer sides of said first opening (111) while extending in parallel with each other and in parallel with the two reinforcing portions (22), and each of said second connecting portions (12) is respectively provided with two second stepped surfaces (122) located at two opposite outer sides of said second opening (121) while extending in parallel with said two first stepped surfaces (112) and in parallel with the two reinforcing portions (22), and wherein
the two reinforcing portions (22) of each of said longitudinal branch pipes (2) are attached to said two second stepped surfaces (122) by welding.

2. The trampoline support frame according to claim 1, wherein
each of said first connecting portions (11) is respectively provided with two first curved surfaces (113) connected to said two first stepped surfaces (112) and being opposite to each other, and
each of said second connecting portions (12) is respectively provided with two second curved surfaces (123) connected to said two second stepped surfaces (122) and being opposite to each other so as to be located at two opposite outer sides of said two first curved surfaces (113), and
two bearing surfaces (24) of each of said longitudinal branch pipes (2) are attached against one of said second curved surfaces (123).

3. The trampoline support frame according to claim 1 or 2, wherein said two reinforcing portions (22) of each of said longitudinal branch pipes (2) are extended more than one-half of width of said two second stepped surfaces (122).

4. The trampoline support frame according to claim 3, wherein each of said longitudinal branch pipes (2) is respectively provided with at least one additive weld hole (25) provided in one of said reinforcing portions (22), such that said reinforcing portion (22) is fixed at inner side thereof to said second stepped surface (122) by welding.

5. The trampoline support frame according to any of the preceding claims, wherein said trampoline support frame further comprises a plurality of connecting pipes (3) respectively provided in one of said fitting portions (21), and a plurality of supporting pipes (4) mounted while connected to said adjacent two connecting pipes (3) at one side far away from said fitting portion (21).

6. The trampoline support frame according to claim 5, wherein said trampoline support frame further comprises a plurality of pipes for enclosure net (5) respectively mounted and fixed to the outside of one of said longitudinal branch pipes (2) and one of said connecting pipes (3) while extended toward one side far away from said supporting pipe (4), for allowing a safety net (7) to be mounted thereto.

## Patentansprüche

1. Trampolin-Tragrahmen, umfassend
eine Mehrzahl von Quertragrahmenrohren (1), die jeweils mit einem gekrümmten Abschnitt (10) versehen und so miteinander verbunden sind, dass diese einen ringförmigen Rahmen ausbilden, der für ein an seiner Innenseite zu montierendes Springbauteil (6) vorgesehen ist, und
eine Mehrzahl von Längstragrahmenrohren (2), die jeweils an einem der Quertragrahmenrohre (1) vorgesehen sind, wobei jedes der Längstragrahmenrohre (2) jeweils versehen ist mit einem Montageabschnitt (21),
zwei Verstärkungsabschnitte (22), die sich einstückig von dem Montageabschnitt (21) zu den entsprechenden zwei Seitenflächen des Quertragrahmenrohrs (1) erstrecken und an dem Quertragrahmenrohr (1) durch Schweißen befestigt sind,
einen Aufnahmeraum (23), der zwischen den beiden Verstärkungsabschnitten (22) ausgebildet ist und für die Anordnung eines der Quertragrahmenrohre (1) darin vorgesehen ist, und
zwei Auflageflächen (24), von denen jede zwischen zwei Enden der beiden Verstärkungsabschnitte (22) und in Richtung des Aufnahmeraums (23) ausgebildet ist, um eines der Quertragrahmenrohre (1) abzustützen;
**dadurch gekennzeichnet, dass** jedes der Quertragrahmenrohre (1) jeweils mit einem ersten Verbindungsabschnitt (11), der an einem Ende des gekrümmten Abschnitts (10) vorgesehen ist und mit einer ersten Öffnung (111) versehen ist, und einem zweiten Verbindungsabschnitt (12), der an einem anderen Ende des gekrümmten Abschnitts (10) vorgesehen ist und mit einer zweiten Öffnung (121) versehen ist, versehen ist, wobei
wenn ein erstes Quertragrahmenrohr (1) der Mehrzahl von Quertragrahmenrohren (1) und ein zweites Quertragrahmenrohr (1) der Mehrzahl von Quertragrahmenrohren (1) angrenzend an das erste Quertragrahmenrohr (1) miteinander verbunden sind, um den ringförmigen Rahmen auszubilden, der zweite Verbindungsabschnitt (12) des ersten Quertragrahmenrohrs (1) den ersten Verbindungsabschnitt (11) des zweiten Quertragrahmenrohrs (1) abdeckt, wobei
jeder der ersten Verbindungsabschnitte (11) jeweils mit zwei ersten abgestuften Flächen (112) versehen ist, die an zwei einander gegenüberliegenden Außenseiten der ersten Öffnung (111) angeordnet sind, während diese sich parallel zueinander und parallel zu den zwei Verstärkungsabschnitten (22) erstrecken, und jeder der zweiten Verbindungsabschnitte (12) jeweils mit zwei zweiten abgestuften Flächen (122) versehen ist, die an zwei einander gegenüberliegenden Außenseiten der zweiten Öffnung (121) angeordnet sind, während diese sich parallel zu den zwei ersten abgestuften Flächen (112) und parallel zu den zwei Verstärkungsabschnitten (22) erstrecken, und wobei
die beiden Verstärkungsabschnitte (22) jedes der Längstragrahmenrohre (2) an den beiden zweiten abgestuften Flächen (122) durch Schweißen befestigt sind.

2. Trampolin-Tragrahmen nach Anspruch 1, wobei
jeder der ersten Verbindungsabschnitte (11) jeweils mit zwei ersten gekrümmten Flächen (113) versehen ist, die mit den beiden ersten abgestuften Flächen (112) verbunden sind und einander gegenüberliegen, und
jeder der zweiten Verbindungsabschnitte (12) jeweils mit zwei zweiten gekrümmten Flächen (123) versehen ist, die mit den beiden zweiten abgestuften Flächen (122) verbunden sind und einander gegenüberliegen, so dass diese an zwei gegenüberliegenden Außenseiten der beiden ersten gekrümmten Flächen (113) angeordnet sind, und
zwei Auflageflächen (24) jedes der genannten Längstragrahmenrohre (2) an einer der zweiten gekrümmten Flächen (123) befestigt sind.

3. Trampolin-Tragrahmen nach Anspruch 1 oder 2, wobei die beiden Verstärkungsabschnitte (22) jedes der Längstragrahmenrohre (2) sich über mehr als die Hälfte der Breite der beiden zweiten abgestuften Flächen (122) erstrecken.

4. Trampolin-Tragrahmen nach Anspruch 3, wobei jedes der Längstragrahmenrohre (2) jeweils mit mindestens einem zusätzlichen Schweißloch (25) versehen ist, das in einem der Verstärkungsabschnitte (22) vorgesehen ist, so dass der Verstärkungsabschnitt (22) an seiner Innenseite an der zweiten abgestuften Fläche (122) durch Schweißen befestigt ist.

5. Trampolin-Tragrahmen nach einem der vorhergehenden Ansprüche, wobei der Trampolin-Tragrahmen weiterhin eine Mehrzahl von Verbindungsrohren (3), die jeweils in einem der Montageabschnitte (21) vorgesehen sind, und eine Mehrzahl von Stützrohren (4) umfasst, die montiert und gleichzeitig mit den benachbarten beiden Verbindungsrohren (3) an einer Seite weit weg von dem Montageabschnitt (21) verbunden sind.

6. Trampolin-Tragrahmen nach Anspruch 5, wobei der Trampolin-Tragrahmen weiterhin eine Mehrzahl von Rohren für ein Einfassungsnetz (5) aufweist, die jeweils an der Außenseite von einem der Längstragrahmenrohre (2) und von einem der Verbindungsrohre (3) montiert und befestigt sind und sich dabei zu einer Seite weit weg von dem Stützrohr (4) erstrecken, um die Montage eines Sicherheitsnetzes (7) daran zu ermöglichen.

## Revendications

1. Un cadre de support de trampoline comprenant
une pluralité de tubes de raccord transversaux (1) étant chacun fournis avec une partie courbe (10) et connectés les uns aux autres de manière à former un cadre annulaire prévu pour un composant de rebond (6) à monter sur le côté intérieur de celui-ci, et
une pluralité de tubes de raccord longitudinaux (2) correspondant chacun à l'un desdits tubes de raccord transversaux (1), dans lesquels chacun desdits tubes de raccords longitudinaux est muni d'une partie de raccord (21),
deux parties de renfort (22) s'étendant intégralement depuis ladite partie de raccord (21) vers deux surfaces latérales correspondantes dudit tube de raccord transversal (1) et fixées par soudage audit tube de raccord transversal (1),
un espace de logement (23) formé entre les deux parties de renfort (22) et prévu pour l'une desdits tubes de raccord transversaux (1) devant s'y localiser, et
deux surfaces d'appui (24), chacune étant formée entre deux extrémités desdites deux parties de renfort (22) et vers ledit espace de logement (23) de manière à supporter l'un desdits tubes de raccord transversaux (1) ;
**caractérisé en ce que** chacun des desdits tubes de raccord transversaux (1) est respectivement prévu avec une première partie de liaison (11) disposée à une extrémité de ladite partie courbe (10) et fournie avec une première ouverture (111), et une seconde partie de liaison (12) disposée à une autre extrémité de ladite partie courbe (10) et fournie avec une seconde ouverture, dans lequel
lorsque l'on raccorde l'un à l'autre un premier tube de raccord transversal (1) de ladite pluralité de tubes de raccord transversaux (1) avec un second tube de raccord transversal (1) de ladite pluralité de tubes de raccord transversaux (1) adjacent audit premier tube de raccord transversal (1) afin de former un cadre annulaire, la seconde partie de liaison (12) du premier tube de raccord transversal (1) recouvre la première partie de liaison (11) du second tube de raccord transversal (1), dans lequel
chacune desdites premières parties de liaison (11) est respectivement munie de deux premières surfaces étagées (112) disposés à deux côtés extérieurs opposés de ladite première ouverture (111) tout en étant parallèles l'une avec l'autre et parallèles avec les deux parties de renfort (22), et chacune desdites secondes parties de liaison (12) est respectivement munie de deux secondes surfaces étagées (122) disposés à deux côtés extérieurs opposés de ladite seconde ouverture (121) tout en étant parallèles avec les deux premières surfaces étagées (112) et parallèles avec les deux parties de renfort (22), et dans lequel
les deux parties de renfort (22) de chacun des dits tubes de raccord longitudinaux sont fixées auxdites secondes surfaces étagées (122) par soudage.

2. Le cadre de support de trampoline selon la revendication 1, dans lequel
chacune desdites premières parties de liaison (11) est respectivement pourvue de deux premières surfaces courbes (113) reliées auxdites premières surfaces étagées (112) et étant opposées l'une à l'autre, et
chacune de lesdites secondes parties de liaison (12) est respectivement pourvue de deux secondes surfaces courbes (123) reliées auxdites secondes surfaces étagées (122) et opposées l'une à l'autre de manière à être situées sur deux côtés extérieurs opposés desdites deux premières surfaces courbes (113),
lesdites deux surfaces d'appui (24) de chacun desdits tubes de raccord longitudinal (2) sont fixées contre l'une desdites secondes surfaces courbes (123).

3. Le cadre de support de trampoline de la revendication 1 ou 2, dans lequel lesdites parties de renfort (22) de chacun desdits tubes de raccord longitudinaux (2) s'étendent sur plus de la moitié de la largeur desdites secondes surfaces étagées (122).

4. Le cadre de support de trampoline de la revendication 3, dans lequel chacun desdits tubes de raccord longitudinaux (2) est respectivement pourvu d'au moins un trou de soudure additif (25) prévu dans l'une desdites parties de renfort (22), de sorte que ladite partie de renfort (22) est fixé sur son côté intérieur par soudage à ladite seconde surface étagée (122).

5. Le cadre de support de trampoline selon l'une quelconque des revendications précédentes, dans lequel ledit cadre de support de trampoline comprend en outre une pluralité de tubes de liaison (3) respectivement prévus dans l'une desdites parties de raccord (21), et une pluralité de tubes de support (4) montés lorsque connectés auxdits deux tubes de liaison adjacents (3) sur un côté éloigné de ladite partie de raccord (21).

6. Le cadre de support de trampoline selon la revendication 5, dans lequel ledit cadre de support de trampoline comprend en outre une pluralité de tubes pour le filet de délimitation (5) respectivement montés et fixés à l'extérieur de l'un desdits tubes de raccord longitudinaux (2) et de l'un desdits tubes de liaison (3) tout en étant étendu vers un côté éloigné dudit tube de support (4), pour permettre à un filet de sécurité (7) d'y être installé.
